(19) Europäisches Patentamt / European Patent Office / Office européen des brevets

(11) **EP 3 378 551 A1**

(12) **EUROPEAN PATENT APPLICATION**

(43) Date of publication:
26.09.2018 Bulletin 2018/39

(51) Int Cl.:
*B01D 53/04* (2006.01)      *B01D 53/047* (2006.01)
*B01D 53/26* (2006.01)      *B01D 53/28* (2006.01)
*F24F 3/14* (2006.01)

(21) Application number: 17192157.0

(22) Date of filing: 20.09.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 22.03.2017   JP 2017056051

(71) Applicant: **KABUSHIKI KAISHA TOSHIBA**
**Minato-ku**
**Tokyo**
**105-8001 (JP)**

(72) Inventors:
• **HARADA, Koichi**
**Tokyo, 105-8001 (JP)**
• **YONETSU, Maki**
**Tokyo, 105-8001 (JP)**
• **SAITO, Hitomi**
**Tokyo, 105-8001 (JP)**
• **RAGI, Ryosuke**
**Tokyo, 105-8001 (JP)**
• **SUENAGA, Seiichi**
**Tokyo, 105-8001 (JP)**

(74) Representative: **Moreland, David**
**Marks & Clerk LLP**
**Aurora**
**120 Bothwell Street**
**Glasgow G2 7JS (GB)**

(54) **COMPOSITE MEMBER, GAS SEPARATOR AND GAS SEPARATING DEVICE**

(57) A gas separator of an arrangement includes: a honeycomb base having a plurality of through holes juxtaposed and made apart from one another by partition walls extending between a first face and a second face; and porous aggregates of inorganic material particles filled in the through holes and each having a third face and a fourth face. The porous aggregates each include pores passing from the third face to the fourth face among the inorganic material particles, and air permeability of the porous aggregates from the third faces to the fourth faces is not less than $1 \times 10^{-14}$ $m^2$ nor more than $1 \times 10^{-11}$ $m^2$.

EP 3 378 551 A1

**Description**

FIELD

Arrangements described herein relate generally to a composite member, a gas separator, and a gas separating device.

BACKGROUND

In air-conditioning technology for domestic air conditioner and the like, progresses have been made in technology both for refrigerant and energy efficiency, which accordingly gives rise to a demand for a more comfortable living environment. Under such circumstances, air conditioners have come to have more functions not only for temperature control but also humidity control, ventilation, air-flow control, and air cleaning. An improvement in energy efficiency has become the most important issue because of the recent energy shortage. In hot and humid Asian countries as well, in accordance with the improvement of standard of living, humidity control, in particular, dehumidification is considered to be important, and air conditioning that achieves energy-saving dehumidification and thus gives only a small load to the environment has been required. Dehumidification by refrigerant cooling using a compressor or the like, which is the mainstream technology at present, cools the air to condense vapor and re-heats the cooled air for temperature control, which requires enormous energy. This results in increased power consumption and thus has a problem of a great environmental load.

A gas separating device such as a desiccant air conditioner adsorbs moisture in a room by a moisture absorber using a hygroscopic material which adsorbs vapor, and thereafter warms the moisture and discharges it outdoors, and thus is more excellent in energy saving than the refrigerant-type dehumidification. As the hygroscopic material, there has been known, for example, a hygroscopic material in which a porous body such as a ceramics porous body or zeolite is impregnated with and carries a deliquescent substance made of chloride or bromide of sodium, lithium, calcium, or magnesium. The hygroscopic material, however, requires regeneration treatment since it saturates when continuing adsorbing water. The regeneration treatment of the hygroscopic material heats the hygroscopic material to discharge the water. Combining the regeneration treatment of the hygroscopic material and air cooling is inefficient.

As a device to dehumidify air used for instrumentation devices, a dehumidifier using a hygroscopic membrane such as a zeolite membrane has been known. Zeolite can adsorb water molecules into its internal micropores and can release them, and accordingly is expected as a hygroscopic material and a dehumidifying material. The dehumidifier using the zeolite membrane is excellent in vapor hygroscopicity, while having a problem that a permeation flow rate and a permeation velocity of vapor are low. Since in the application in air conditioning or the like, the flow rate and the flow velocity have to be high enough, the dehumidifier using the zeolite membrane is not usable to constitute a practical air-conditioning system. Thermally decomposing, zeolite is not usable as a sintered compact unlike particles of other inorganic materials such as alumina. Under such circumstances, using a powder compact in portions other than the membrane when zeolite is used as the hygroscopic material has been considered. In a compact using a binder, however, the binder covers surfaces of its particles, which does not allow the zeolite to exhibit hygroscopicity that it originally has. Further, a compact made of compacted zeolite powder, though excellent in initial performance, greatly deteriorates with time and cannot constitute a practical air-conditioning system, similarly to the zeolite membrane.

As an energy-saving and low-cost method that can replace the present air-conditioning method, studies are being made on a continuous dehumidification method using a vapor separator requiring no regeneration treatment. A humidity controller using the vapor separator is structured such that, for example, a gas separator in which a liquid absorbent such as an aqueous lithium chloride solution is filled between two vapor permeable membranes that use polyethylene or fluorocarbon resin is disposed between a space that is to be moisture-controlled, such as a room, and a space such as the outside of the room. Vapor is sent/received from/to the air in the room and the liquid absorbent through the vapor permeable membranes. The vapor permeable membranes, however, are apt to break and a moving velocity of vapor is low in this method, which makes efficient dehumidification difficult.

SUMMARY

A subject to be solved by aspects of the present invention is to provide a composite member and a gas separator capable of having performance, strength, and so on high enough to be applied to air conditioning and the like as well as maintaining practical gas separation performance, and a gas separating device using the same.

According to the aspects of the present invention there is provided a composite member and a gas separator capable of having performance, strength, and so on high enough to be applied to air conditioning and the like as well as maintaining practical gas separation performance, and a gas separating device using the same according to Claim 1 and other dependent claims hereof.

BRIEF DESCRIPTION OF THE DRAWINGS

Fig. 1 is a view illustrating the structure of a gas separating device of an arrangement.

Fig. 2 is a perspective view illustrating a composite member used as a gas separator in the gas separating device illustrated in Fig. 1.

Fig. 3 is a sectional view illustrating the composite member illustrated in Fig. 2.

Fig. 4 is a perspective view illustrating a honeycomb base used in the composite member illustrated in Fig. 2.

Fig. 5 is a sectional view illustrating the honeycomb base illustrated in Fig. 4.

Fig. 6 is a sectional view illustrating a usage example of the gas separator illustrated in Fig. 2.

Fig. 7 is a view illustrating a first example where the gas separating device illustrated in Fig. 1 is used as a dehumidifier.

Fig. 8 is a view illustrating a second example where the gas separating device illustrated in Fig. 1 is used as a dehumidifier.

DETAILED DESCRIPTION

According to the arrangements of the present invention, there is provided a composite member that includes: a honeycomb base having a first face, a second face opposite to the first face, and a plurality of through holes juxtaposed and made apart from each other by partition walls extending between the first face and the second face; and porous aggregates of inorganic material particles, filled in the through holes, each having a third face located on the first face side and a fourth face located on the second face side. In the composite member, the porous aggregates each include pores passing from the third face to the fourth face among the inorganic material particles, and an air permeability of the porous aggregates from the third faces to the fourth faces is not less than $1 \times 10^{-14}$ m$^2$ nor more than $1 \times 10^{-11}$ m$^2$.

Hereinafter, a composite member and a gas separator of arrangements and a gas separating device using the same will be described with reference to the drawings. In the arrangements, substantially the same constituent parts are denoted by the same reference signs and description thereof may be partly omitted. The drawings are schematic, and relations between thicknesses and planar dimensions, thickness ratios of parts, and so on may differ from actual ones. In the drawings, terms indicating directions such as up and down may differ from actual directions based on the gravitational acceleration direction.

(First Arrangement)

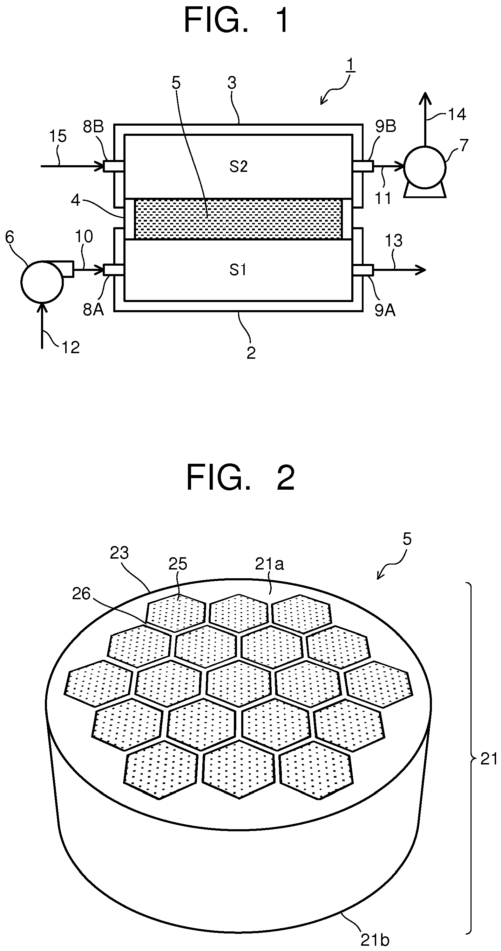

Fig. 1 illustrates the structure of a gas separating device according to a first arrangement. The gas separating device 1 illustrated in Fig. 1 separates separation target gas from gas to be treated present in a treatment target space (space to be treated), such as air containing the gas (separation target gas) such as, for example, vapor (water vapor) or organic solvent gas (organic solvent vapor), to lower the gas concentration in the space to be treated. The gas separating device 1 includes: a separation chamber 2 constituting a first space S1; a pressure-reduced chamber 3 constituting a second space S2; a connecting channel 4 connecting the separation chamber 2 and the pressure-reduced chamber 3 to make them communicate with each other; a gas separator 5 disposed in the connecting channel 4 so as to separate the separation chamber 2 and the pressure-reduced chamber 3; a blower 6 which sends the gas to be treated containing the separation target gas to the separation chamber 2; and a pressure-reducing pump 7 which reduces a pressure in the pressure-reduced chamber 4.

The separation chamber 2 has an intake port 8A and a discharge port 9A, and the intake port 8A is connected to the blower 6 by a pipe 10. The pressure-reduced chamber 3 has an intake port 8B and a discharge port 9B, and the discharge port 9B is connected to the pressure-reducing pump 7 by a pipe 11. The gas to be treated such as the air containing the separation target gas is sent to the first space S1 in the separation chamber 2 through the pipe 10 by the operation of the blower 6. The gas to be treated is led to the blower 6 through a pipe 12 from the space to be treated (not illustrated) such as a room, the interior of a device, the interior of a factory (tightly closed space or the like), a depository, or a stockroom whose concentration of the separation target gas such as, for example, vapor or organic solvent gas is to be decreased. The separation target gas is separated in the separation chamber 2, and the gas to be treated whose gas concentration is decreased is returned to the space to be treated through a pipe 13.

The pressure-reducing pump 7, when operated, pressure-reduces the second space S2 in the pressure-reduced chamber 3 so as to cause a difference between a pressure in the separation chamber 2 (pressure in the first space S1) and a pressure in the pressure-reduced chamber 3 (pressure in the second space S2). The gas such as the vapor or organic solvent gas separated from the gas to be treated is discharged through a pipe 14 connected to the pressure-reducing pump 7. The separated gas (gas having permeated to the pressure-reduced chamber 3) is released to the atmosphere or is recovered when necessary. A pipe 15 is connected to the intake port 8B of the pressure-reduced chamber 3 so that external air or the like is taken into the pressure-reduced chamber 3 while the pressure-reduced chamber 3 is being pressure-reduced. The pipe 15 may be provided with a valve (not illustrated) when required. The pipe 15 may be omitted depending on circumstances.

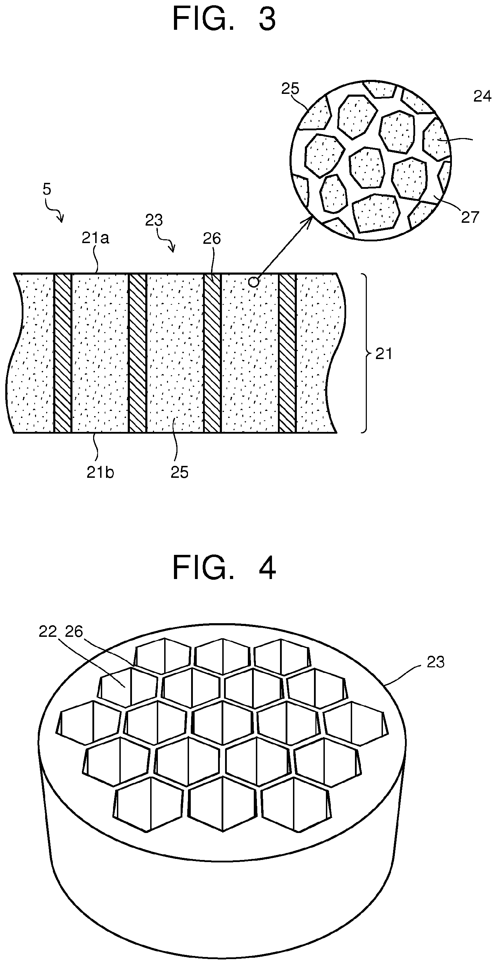

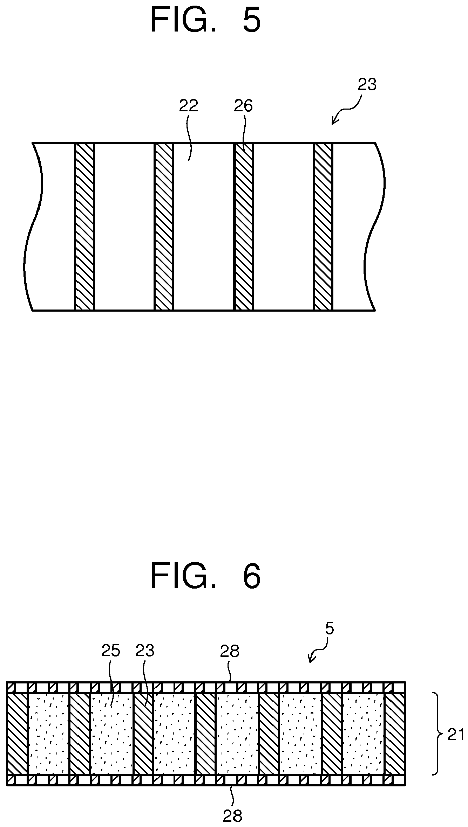

The gas separator 5 will be described with reference to Fig. 2 to Fig. 5. Fig. 2 is a perspective view of a composite member used as the gas separator 5, Fig. 3 is a sectional view of the composite member, Fig. 4 is a perspective view of a honeycomb base used in the composite member, and Fig. 5 is a sectional view of the honeycomb base. As illustrated in these drawings, the gas separator 5 includes the composite member 21 having an upper face 21a, a lower face 21b opposite to the upper face 21a, and holes opening from the upper face 21a to the lower face 21b. The composite member 21 includes: the honeycomb base 23 having a plurality of through holes 22; and porous aggregates 25 of inorganic material particles 24 filled in the plural through holes 22. The honeycomb base 23 has a plurality of partition walls 26 extending in the thickness direction between a face (first face) corresponding to the upper face 21a of the composite member 21 and a face (second face) corresponding to the lower face 21b; and the plural through holes 22 made apart from one another by the partition walls 26 and juxtaposed to extend in the thickness direction. In the plural through holes 22, the porous aggregates 25 of the inorganic material particles 24 are filled respectively. The porous aggregates 25 each have pores 27 opening from a face (third face) corresponding to the upper face 21a of the composite member 21 to a face (fourth face) corresponding to the lower face 21b. The pores 27 are formed among the inorganic material particles 24.

Due to such pores 27 in the porous aggregates 25, air permeability of the composite member 21 falls within a range of not less than $1 \times 10^{-14}$ m$^2$ nor more than $1 \times 10^{-11}$ m$^2$. Since the honeycomb base 23 except the plural through holes 22 is formed of a dense material, the air permeability of the composite member 21 is based on air permeability of the porous aggregates 25. The first face of the honeycomb base 23 and the third faces of the porous aggregates form the same face (21a), and similarly, the second face and the fourth faces form the same face (21b). Note that the faces (21a, 21b) formed by the faces of the honeycomb base 23 and the faces of the porous aggregates 25 are not limited to flat faces, but some of the porous aggregates 25 may project or be dented.

The composite member 21 constituting the gas separator 5 has a shape such as, for example, a disk shape or a rectangular parallelepiped shape, and has the first face 21a exposed to the inside of the separation chamber 2 (first space S1) and the second face 21b exposed to the inside of the pressure-reduced chamber 3 (second space S2). At least part of the pores 27 provided in the porous aggregates 25 of the composite member 21 open from the first face 21a to the second face 21b of the composite member 21. In the pores 27 of the porous aggregates 25 of the gas separator 5, a liquefied substance of the separation target gas, for example, water in a case of vapor or an organic solvent in a case of an organic solvent gas, is held to form wet seals. The gas separator 5 may originally contain the liquefied substance of the separation target gas or may be made to contain the liquefied substance when in use. A specific structure of the composite member 21 as the gas separator 5 will be described in detail later.

In a case where the gas separator 5 is used as a vapor separator, the vapor separator (5) may include a water-soluble hygroscopic material present in the pores 27 of the porous aggregates 25. The water-soluble hygroscopic material absorbs and holds moisture, which facilitates forming the wet seals in the vapor separator (5). As the water-soluble hygroscopic material, citrate, carbonate, phosphate, halide salt, oxysalt, hydroxide salt, sulfate, or the like of a group 1 element or a group 2 element is used. These compounds each may be used alone or they may be used as a composite. The water-soluble hygroscopic material may be present in a state of segregating in the pores 27, or in a state of thinly and uniformly adhering on the whole or part of inner walls of the pores 27. Further, the vapor separator (5) may include gas adsorbing liquid such as ionic liquid present in the pores 27 of the porous aggregates 25.

Specific examples of the water-soluble hygroscopic material include calcium chloride ($CaCl_2$), lithium chloride (LiCl), sodium chloride (NaCl), potassium chloride (KCl), lithium bromide (LiBr), sodium bromide (NaBr), potassium bromide (KBr), lithium iodide (LiI), sodium iodide (NaI), potassium iodide (KI), calcium oxide (CaO), sodium oxide ($Na_2O$), potassium oxide ($K_2O$), calcium hydroxide ($Ca(OH)_2$), sodium hydroxide (NaOH), potassium hydroxide (KOH), lithium hydroxide (LiOH), calcium carbonate ($CaCO_3$), magnesium carbonate ($MgCO_3$), lithium carbonate ($Li_2CO_3$), sodium carbonate ($Na_2CO_3$), potassium carbonate ($K_2CO_3$), sodium phosphate ($Na_3PO_4$), potassium phosphate ($K_3PO_4$), sodium citrate ($Na_3(C_3H_5O(COO)_3$) or the like), potassium citrate ($K_3(C_3H_5O(COO)_3$) or the like), sodium sulfate ($Na_2SO_4$), potassium sulfate ($K_2SO_4$), lithium sulfate ($Li_2SO_4$), and hydrates of these.

The gas separator 5 used in the gas separating device 1 may be supported by gas permeable supports 28 as illustrated in Fig. 6. Fig. 6 illustrates a state where the pair of supports 28 is disposed along both surfaces of the gas separator 5, but the support 28 may be disposed only along one surface of the gas separator 5. As the support 28, paper, punching metal, a polyimide porous body, or the like is used, for instance, or it may be a mesh-like substance other than these. The support 28 preferably has through holes with a several μm diameter or more, but this is not restrictive.

The gas to be treated such as the air containing the separation target gas is sent into the separation chamber 2 by the operation of the blower 6 as described above. When the pressure-reducing pump 7 is operated simultaneously with the blower 3 to pressure-reduce the inside of the pressure-reduced chamber 3, the pressure in the separation chamber 2 and the pressure in the pressure-reduced chamber 3 become different from each other. Due to this pressure difference, a partial pressure of the separation target gas such as a vapor pressure in the pressure-reduced chamber 3 (partial pressure of the separation target gas in the second space S2 (hereinafter, simply referred to as a gas partial pressure)) becomes lower than a gas partial pressure such as a vapor pressure in the separation chamber 2 (gas partial pressure in the first space S1). In the gas separator 5, since the liquefied substance of the separation target gas held in the pores 27 form the wet seals, the gas partial pressure difference between the inside of the separation chamber 2 and the inside of the pressure-reduced chamber 3 causes the separation target gas to move from the separation chamber 2 to the pressure-reduced chamber 3 which are arranged, with the gas separator 5 therebetween.

To move the separation target gas through the gas separator 5, it is preferable to pressure-reduce the inside of the pressure-reduced chamber 3 by the pressure-reducing pump 7 so as to cause the pressure in the pressure-reduced chamber 3 to be -50 kPa or lower relatively to the pressure in the separation chamber 2. In other words, the inside of the pressure-reduced chamber 3 is preferably pressure-reduced so that the difference between the pressure in the separation chamber 2 and the pressure in the pressure-reduced chamber 3 becomes 50 kPa or more. If this pressure difference is less than 50 kPa, it may not be possible to sufficiently promote the movement of the separation target gas from the inside of the separation chamber 2 to the inside of the pressure-reduced chamber 3. The pressure difference between the separation chamber 2 and the pressure-reduced chamber 3 is preferably less than 100 kPa. If the pressure difference is too large, the porous aggregates 25 constituting the gas separator 5 may break. The pressure difference between the separation chamber 2 and the pressure-reduced chamber 3 is more preferably within a range of 80 to 90 kPa.

In the gas separating device 1 illustrated in Fig. 1, the pressure-reducing pump 7 which pressure-reduces the inside of the pressure-reduced chamber 3 causes the gas partial pressure difference between the separation chamber 2 and the pressure-reduced chamber 3, but the gas partial pressure adjusting unit is not limited to this. For example, dry air or heated air may be led into the pressure-reduced chamber 3 (second space S2). This can also cause the gas partial pressure difference such as the vapor pressure difference between the separation chamber 2 and the pressure-reduced chamber 3. In the gas separating device 1 illustrated in Fig. 1, the gas pressure adjusting unit which causes the gas partial pressure difference between the separation chamber 2 and the pressure-reduced chamber 3 is not limited, and any of various kinds of mechanisms capable of causing the gas partial pressure difference can be employed.

The separation target gas contained in the gas to be treated in the separation chamber 2 whose gas partial pressure is relatively high is absorbed by the wet seals formed in the gas separator 5, specifically by the liquefied substance of the separation target gas held in the pores 27. The liquefied substance of the separation target gas in the gas separator 5 permeates to the inside of the pressure-reduced chamber 3 whose gas partial pressure is relatively low. Due to the balance among the gas partial pressure in the separation chamber 2, the gas partial pressure in the pressure-reduced chamber 3, an amount of the liquefied substance of the separation target gas in the gas separator 5, and so on, the absorption of the separation target gas contained in the gas to be treated in the separation chamber 2 by the gas separator 5 and the release of the separation target gas present in the gas separator 5 into the pressure-reduced chamber 3 continuously occur.

The above-described continuous occurrence of the absorption of the separation target gas by the gas separator 5 and the release of the separation target gas present in the gas separator 5 into the pressure-reduced chamber 3 makes it possible to continuously decrease the concentration of the separation target gas in the separation chamber 2 (first space S1) and further the concentration of the separation target gas in the space to be treated connected to the separation chamber 2 via the blower 6. In a case where the separation target gas is vapor, it is possible to reduce an amount of the vapor in the separation chamber 2 and the space to be treated to dehumidify them. The gas to be treated such as the air whose gas concentration has been decreased is returned to the space to be treated from the separation chamber 2. The separation target gas such as the vapor which has permeated to the inside of the pressure-reduced chamber 3 is discharged outside through the pipe 11, the pressure-reducing pump 7, and the pipe 14. In the case where the separation target gas is vapor, moisture which has permeated to the inside of the pressure-reduced chamber 3 may be sent to a third space such as a room that needs to be humidified. In a case where the separation target gas is organic solvent gas, an organic solvent or its gas is recovered when necessary.

In the gas separating device 1 of the arrangement, since the wet seals are formed in the gas separator 5, only the separation target gas contained in the gas to be treated such as the air in the separation chamber 2 can be moved into the pressure-reduced chamber 3. For example, in a case where the gas separating device 1 is used as a dehumidifier, only the moisture in the air basically moves between the separation chamber 2 and the pressure-reduced chamber 3, with little movement of the dry air in the air. This causes little variation of the temperature of the space to be treated which is a dehumidification target. Dehumidifying the inside of the space to be treated with little variation of the temperature of the space does not involve a possibility of decreasing thermal efficiency even in a case where, for example, the dehumidification is combined with cooling of the space. This can increase thermal efficiency when the dehumidifier is combined with cooling.

As previously described, the gas separator 5 illustrated in Fig. 2 to Fig. 5 is constituted by the composite member 21 including: the honeycomb base 23 having the plural through holes 22; and the porous aggregates 25 of the inorganic material particles 24 filled in the plural through holes 22. The composite member 21 has the air permeability of not less than $1 \times 10^{-14}$ $m^2$ nor more than $1 \times 10^{-11}$ $m^2$. That is, the air permeability from the first face 21a to the second face 21b of the composite member 21 is not less than 1 x 10^{-14} m^2 nor more than 1 x 10^{-11} m^2. Using the composite member 21 having such air permeability as the gas separator 5 makes it possible to appropriately move the separation target gas contained in the gas to be treated in the separation chamber 2 into the pressure-reduced chamber 3 through the wet seals formed in the gas separator 5. If the air permeability of the composite member 21 is less than 1 x 10^{-14} m^2, a permeation flow rate of the separation target gas reduces. If the air permeability is over 1 x 10^{-11} m^2, wet sealability of the gas separator 5 deteriorates, which is likely to lower a separation ratio $\alpha$ of the separation target gas.

Here, the air permeability K is found based on the following expression (1), from a pressure difference $\Delta P$ [unit: kPa] between inflow air and outflow air when a predetermined volume of the air is passed through a sample in a vertical direction, and the flow rate $Q_{air}$ [unit: cm^3/min] of the air. In the expression (1), $\delta$ is the thickness of the sample, A is the area of the sample, and $\mu_{air}$ is the viscosity (18.57 $\mu$Pa·s) of the air.

$$K = (Q_{air}/\Delta P)\cdot(\mu_{air}/A)\cdot\delta \qquad ... (1)$$

The gas separation ratio $\alpha$ is a permeation amount ratio of the liquefied substance of the gas, such as water, for instance, and the dry air forming the gas to be treated, and is defined by the following expression (2).

$$\alpha = (N4_{liquid}/N4_{air})/(N3_{liquid}/N3_{air}) \qquad ... (2)$$

In the expression (2), $(N3_{liquid}/N3_{air})$ is a molar ratio between the liquefied substance of the gas and the dry air which are contained in the gas to be treated (air) supplied to the separation chamber 2 (first space S1), and $(N4_{water}/N4_{air})$ is a molar ratio between the liquefied substance of the gas and the dry air which are contained in the gas to be treated (air) discharged from the pressure-reduced chamber 3 (second space S2). $\alpha$ being 1 means that the ratio between the liquefied substance (water or the like) of the gas and the dry air does not change when the gas to be treated flows from the separation-side space S1 to the pressure reduction-side space S2. $\alpha$ being 100 means that the permeation of the dry air is reduced to 1/100 relatively to the permeation of the liquefied substance (water or the like) of the gas from the dehumidification-side space S1 to the pressure reduction-side space S2.

A permeation rate V of the gas (liquefied substance) is defined by the following expression (3).

$$V = \Delta M_{liquid}/A/\Delta t \qquad ... (3)$$

In the expression (3), $\Delta M_{liquid}$ is an amount of the gas liquefied substance recovered in the pressure reduction-side space S2, A is the area of the gas separator 5, and $\Delta t$ is time.

In the composite member 21 as the gas separator 5, a composing material of the honeycomb base 23 is not limited, as long as it is made of a material capable of maintaining strength high enough as a support of the porous aggregates 25 of the inorganic material particles 24. As the composing material of the honeycomb base 23, a ceramics material, a resin material, a metal material, or the like is used, for instance. The shape of the honeycomb base 23 is not limited, and may be any of various shapes such as a disk shape (columnar shape) and a rectangular parallelepiped shape depending on the structure of the gas separating device 1. The thickness of the honeycomb base 23 is preferably within a range of 0.1 to 30 mm. As the partition walls 26 of the honeycomb base 23 are thinner, an amount of the porous aggregates 25 increases, but if the partition walls 26 are too thin, their strength as the support of the porous aggregates 25 decreases. Accordingly, the thickness of the partition walls 26 is preferably within a range of 0.1 to 5 mm, and more preferably within a range of 0.2 to 2 mm.

Wall surfaces of the partition walls 26 may be flat, or may have protrusions and depressions or grooves formed by blasting or the like. The partition walls 26 may have holes connecting the adjacent through holes 22. Here, the honeycomb base 23 has the densely arranged plural through holes 22 connecting the first face 21a and the second face 21b, and is not limited to the one having the hexagonal through holes 22 as illustrated in Fig. 2 and Fig. 4. The shape of the through holes 22 is not limited to a hexagon, and may be a circle, an ellipse, or a polygon other than a hexagon, such as a square. The size of the through holes 22 is preferably large within a range allowing the partition walls 26 having the aforesaid thickness to maintain the whole shape of the composite member 21 having the porous aggregates 25 of the inorganic material particles 24 filled in the through holes 22. However, if the through holes 22 are too large, it may be difficult to maintain the whole shape of the composite member 21. From these viewpoints, the size (maximum value) of the through holes 22 is preferably within a range of 1 to 10 mm, and more preferably within a range of 2 to 5 mm. Here, the size (maximum value) of the through holes 22 means the diameter of their circumcircles.

The porous aggregates 25 of the inorganic material particles 24 are particle aggregates such as unsintered compacts or sintered compacts of the isotropic inorganic material particles 24. The aggregates are not limited to the unsintered compacts or the sintered compacts, and may be heat-treated bodies of the unsintered compacts, or any of various particle aggregate structures in which the appropriate pores 27 can be formed among the inorganic material particles 24. The inorganic material particles 24 in the porous aggregates 25 may be merely in contact with one another, or part thereof may be necked. A method of fabricating the porous aggregates 25 will be described later. As the inorganic material particles 24 constituting the porous aggregates 25, a material having affinity to the separation target gas is preferably used. The inorganic material particles 24 may be either single crystal particles or polycrystalline particles, or may be particles formed through hydrothermal crystallization. Constituting the porous aggregates 25 by the inorganic material particles 24 having affinity to the separation target gas facilitates holding the liquefied substance of the separation target gas in the pores 27 of the porous aggregates 25 and can enhance formability of the wet seals in the gas separator 5.

The inorganic material particles 24 are selected according to the separation target gas. Examples of the separation target gas include vapor and organic solvent gas. Examples of the gas to be treated containing any of these separation target gases include air containing the separation target gas, but the gas to be treated is not limited to this. The organic solvent gas is, for example, vapor of methanol, ethanol, n-propanol, i-propanol, n-butanol, i-butanol, s-butanol, t-butanol, ethyl acetate, n-ethyl acetate, i-butyl formate, acetone, methyl ethyl ketone, methyl isobutyl ketone, diethyl ether, diisopropanol, trichloroethylene, or n-hexane.

In the case where the separation target gas is vapor, the inorganic material particles 24 are preferably a hydrophilic material. As the hydrophilic material forming the inorganic material particles 24, a compound such as an oxide of aluminum (Al), silicon (Si), titanium (T), zirconium (Zr), zinc (Zn), magnesium (Mg), iron (Fe), or the like, aluminosilicate of alkali metal or alkaline-earth metal, carbonate of magnesium (Mg), calcium (Ca), strontium (Sr), or the like, phosphate of Mg, Ca, Sr, or the like, or titanate of Mg, Ca, Sr, Al, or the like is used, or a composite, a mixture, or the like of these is used. Alternatively, it may be a metal compound whose precursor is metal hydroxide, and whose OH group is controlled by, for example, binding the precursor through hydrolysis or the like and stopping the reaction halfway. Specific examples of the hydrophilic material include alumina, silica, titania, zirconia, magnesia, zinc oxide, ferrite, zeolite, hydroxyapatite, and barium titanate, but the hydrophilic material is not limited to these. In a case where zeolite particles are used as the inorganic material particles 24, moisture adsorbed by particle boundaries or in the particles form the wet seals in the gas (vapor) separator 5.

In a case where the separation target gas is organic solvent gas, composite material particles in which an additive element breaking a charge balance is introduced into lattices of the aforesaid hydrophilic compound particles, or deficiency-introduced material particles in which atomic vacancies such as oxygen vacancies are introduced into the lattices of the hydrophilic compound particles are used as the inorganic material particles 24. The hydrophilic compound is as described above, and examples of the additive element introduced into the lattices of such compound particles include titanium (Ti), zirconium (Zr), hafnium (Hf), vanadium (V), chromium (Cr), manganese (Mn), iron (Fe), cobalt (Co), nickel (Ni), copper (Cu), and zinc (Zn). Note that the same element as a cationic element constituting the compound particles is excluded. By introducing these elements into the lattices or introducing the oxygen vacancies or the like into the lattices, it is possible to obtain affinity to the organic solvent.

An average primary particle size of the inorganic material particles 24 constituting the porous aggregates 25 is preferably within a range of 10 nm to 10 μm. Using the inorganic material particles 24 having such an average primary particle size facilitates obtaining the porous aggregates 25 in which an appropriate amount of the pores 27 having an appropriate size are present. If the average primary particle size of the inorganic material particles 24 is over 10 μm, the pores 27 in the porous aggregates 25 are apt to be large, which may deteriorate formability of the wet seals. If the average primary particle size of the inorganic material particles 24 is less than 10 nm, an amount of the pores 27 in the porous aggregates 25 reduces or the pores 27 become too small, which may lower the permeation flow rate of the separation target gas. The average primary particle size of the inorganic material particles 24 is more preferably 50 to 1000 nm, and still more preferably 50 to 500 nm. In order to control the size and amount of the pores 27 in the porous aggregates 25, two kinds or more of the inorganic material particles 24 different in average primary particle size may be used.

Examples of the porous aggregate 25 using the inorganic material particles 24 as described above include a compact (unsintered compact) of the inorganic material particles 24, and a heat-treated body and a sintered body of the compact. A method of fabricating the unsintered compact of the inorganic material particles 24 is as follows, for instance. A powder of the inorganic material particles 24 (inorganic material powder) or a slurry being a mixture of this powder and liquid is filled in the through holes 22 of the honeycomb base 23 and is compressed. For the compression, isostatic pressing, uniaxial pressing, or the like is used. An alternative method of fabricating the porous aggregates 25 may be to mix a binder which scatters at lower temperatures than a decomposition temperature of the inorganic material particles 24. By spreading the inorganic material powder on the top and bottom of the honeycomb base 23 when compressing the inorganic material power, it is possible to further fill the powder compensating for the shrinkage due to the compression, to increase a filling factor of the inorganic material particles 24. When the inorganic material powder is thus compressed, the inorganic material powder remaining on the top and bottom of the honeycomb base 23 may be scraped away or may be left as it is for use. In the case where the liquid or the binder is used, the added liquid or binder is removed by predetermined heat treatment. Further, the porous aggregate 25 may contain an organic fiber, a metal fiber, or an inorganic fiber such as rock wool, ceramic wool, or glass wool.

The sintered compact of the inorganic material particles 24 is obtained through sintering of the inorganic material powder filled and compressed in the through holes 22 of the honeycomb base 23. By adjusting a compression condition and a sintering condition of the inorganic material particles 24, it is possible to obtain the porous aggregates 25 of the inorganic material particles 24 having an appropriate porous state. In the case where zeolite or the like is used as the inorganic material particles 24, they may be densified by a steam-assisted crystallization (SAC) method. In the case where the SAC method is employed, a precursor prepared by filling and compressing the inorganic material powder in the through holes 22 of the honeycomb base 23 is kept at a predetermined temperature in a vapor atmosphere using an autoclave device or the like. Consequently, some of the inorganic material particles 24 are necked and the dense and high-strength porous aggregates 25 are obtained. Further, in a case where the inorganic material particles 24 and the honeycomb base 23 have affinity, the inorganic material particles 24 and wall surfaces of the through holes 22 come into close contact, leading to a further improvement of the strength of the composite member 21. The heat treatment is not limited to the SAC method, and the porous aggregates of the inorganic material particles 24 may be heat-treated bodies of the compacts whose density and strength are made high by other heat treatment.

The gas separator 5 of the arrangement is constituted by the composite member 21 in which the porous aggregates 25 of the inorganic material particles 24 are filled in the through holes 22 of the honeycomb base 23. With this structure, even in the case where the unsintered compacts are used as the porous aggregates 25, the honeycomb base 23 functions as a reinforcer to maintain the strength of the porous aggregates 25 and accordingly the performance of the gas separator 5 using the porous aggregates 25 of the inorganic material particles 24 can be maintained for a long period. For example, in the case where the zeolite is used as the inorganic material particles 24, it cannot be sintered because it thermally decomposes, but by filling the zeolite particles in the through holes 22 of the honeycomb base 23, it is possible to keep the strength of the porous aggregates of the zeolite particles.

The function of the honeycomb base 23 to keep the strength of the porous aggregates 25 is effective not only for zeolite. In a case where a desired average pore size of the pores 27 is small such as, for example, 50 nm or less, if an inorganic material powder having a particle size with which the desired average pore size can be obtained is merely sintered, the average pore size may become large or there may occur a large variation in the pose size due to the aggregation of the inorganic material powder. In such a case, by filling the porous aggregates (unsintered compacts) 25 of the inorganic material particles 24 in the through holes 22 of the honeycomb base 23, it is possible to increase the strength of the porous aggregates 25 while maintaining minute pores among the inorganic material particles 24. In the case where the desired average pore size of the pores 27 is large as well, the strength of the porous sintered compacts is likely to decrease, but the honeycomb base 23 can increase the strength even in such a case.

Further, the composite member 21 in which the porous aggregates 25 of the inorganic material particles 24 are filled in the through holes 22 of the honeycomb base 23 contributes not only to an improvement of the strength of the porous aggregates 25 but also to an improvement of the permeation rate, the separation rate, and the like by the porous aggregates 25. A reason for this is not clear, but may be that the velocity increases on interfaces between the partition walls 26 and the porous aggregates 25 of the inorganic material particles 24, for instance. Owing to the above, when the composite member 21 including the porous aggregates 25 and the honeycomb base 23 is used as the gas separator 5, it is possible to improve the gas separation performance of the gas separating device 1.

In the gas separator 5 of the arrangement, the average pore size of the pores 27 present among the inorganic material particles 24 is preferably within a range of 1 nm to 5 $\mu$m. Setting the average pore size of the pores 27 within the range of 1 nm to 5 $\mu$m facilitates holding the liquefied substance of the separation target gas in the pores 27 where the separation target gas passes and forming the wet seals in the gas separator 5, and at the same time can appropriately keep the permeation flow rate of the separation target gas. If the average pore size of the pores 27 is over 5 $\mu$m, wet sealability deteriorates, and the balance between the absorption of the separation target gas from the inside of the separation chamber 2 and the release of the separation target gas to the pressure-reduced chamber 3 becomes worse, and the gas separation performance is apt to deteriorate. If the average pore size of the pores 27 is less than 1 nm, the permeation flow rate of the separation target gas such as vapor or an organic solvent gas is apt to become low. The average pore size of the pores 27 is more preferably within a range of 10 nm to 1 $\mu$m.

Volume porosity of the porous aggregates 25 (volume fraction of the pores 27 in the porous aggregates 25) is preferably within a range of 20 to 70%. If the volume porosity of the porous aggregates 25 is less than 20%, an amount of the separation target gas capable of passing through the pores 27 decreases, and accordingly an absorption amount of the separation target gas from the inside of the separation chamber 2 and a release amount of the separation target gas to the pressure-reduced chamber 3 may become insufficient. If the volume porosity of the porous aggregates 25 is over 70%, the strength of the porous aggregates 25 decreases, which may prevent the continuous operation of the gas separating device 1 or may deteriorate wet sealability of the gas separator 5. The volume porosity of the porous aggregates 25 is more preferably within a range of 30 to 60%. Note that the volume porosity of the porous aggregates 25 and the shape (average pore size and so on) of the pores 27 are values measured by a mercury intrusion method.

In the porous aggregates 25 of the composite member 21 constituting the gas separator 5, the air permeability from the first face 21a to the second face 21b is adjusted within the range of $1 \times 10^{-14}$ to $1 \times 10^{-11}$ m$^2$, based on the average primary particle size of the inorganic material particles 24, the formation condition of the inorganic material particles 24, the average pore size of the pores 27, the volume porosity, and so on described above. These make it possible to improve the permeation flow rate of the separation target gas while keeping a practical separation ratio $\alpha$ of the separation target gas, for example, an about 3 to 100 separation ratio $\alpha$. If the air permeability of the porous aggregates 25 is less than $1 \times 10^{-14}$ m$^2$, the permeation flow rate of the separation target gas reduces. If the air permeability is over $1 \times 10^{-11}$ m$^2$, wet sealability deteriorates and accordingly the separation ratio $\alpha$ of the separation target gas is apt to be low. The air permeability of the porous aggregates 25 is preferably within a range of $1 \times 10^{-14}$ to $1 \times 10^{-13}$ m$^2$. Using the gas separator 5 achieving both the aforesaid separation ratio $\alpha$ and permeation flow rate of the separation target gas can enhance the continuous gas separation performance not accompanied by the regeneration treatment. Therefore, it is possible to provide the practical and efficient gas separating device 1.

(Second Arrangement)

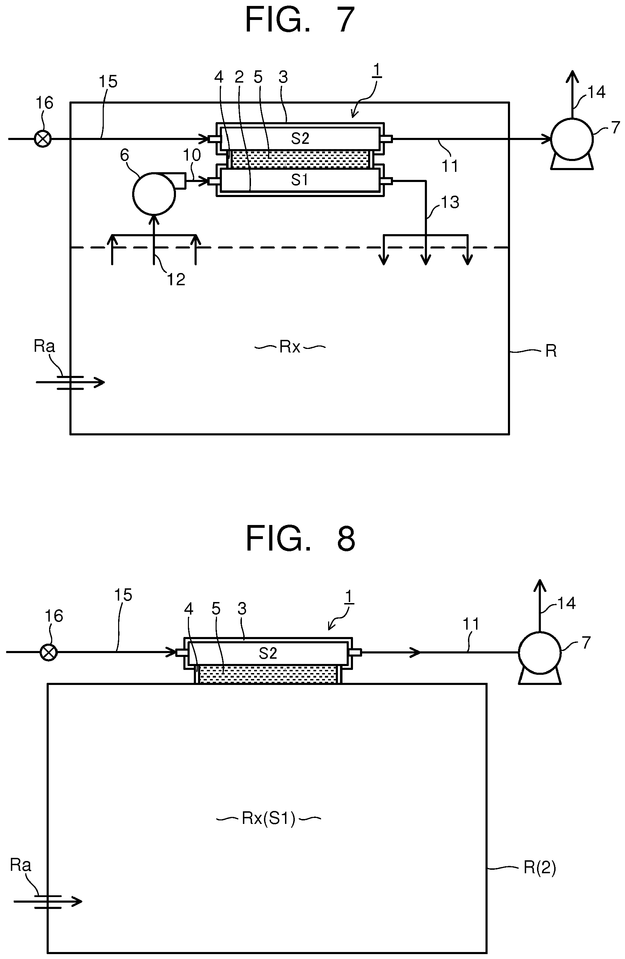

Next, a structure example where the gas separating device 1 according to the first arrangement is used as a dehumidifier will be described with reference to Fig. 7 and Fig. 8. In Fig. 7, R represents a room constituting a dehumidification target space Rx, and the room R has an intake port Ra. The dehumidifier 1 is provided in the room R in order to remove vapor (moisture) from air in the dehumidification target space Rx. In the dehumidifier 1 illustrated in Fig. 7, the pipe 15 through which external air is taken in is connected to the pressure-reduced chamber 3 (second space S2). In the dehumidifier 1, the inside of the pressure-reduced chamber 3 is pressure-reduced while the external air is taken into the pressure-reduced chamber 3. The pipe 15 has a valve 16. The pipe 15 may be omitted.

The air in the space Rx basically contains vapor (moisture) and dry air. The air in the space Rx is sent into the separation chamber (dehumidification chamber) 2 of the dehumidifier 1 through the pipes 12, 10 by the operation of the blower 6. The air dehumidified in the separation chamber 2 is returned to the space Rx through the pipe 13. The dehumidifying operation using the gas separator 5 (gas separation operation) is as described in detail in the first arrangement. That is, the moisture permeates to the pressure-reduced chamber 3 from the separation chamber 2 through the gas separator 5 in which the wet seals are formed. Since the absorption of the moisture in the air in the separation chamber 2 by the gas separator 5 and the release of the moisture in the gas separator 5 to the pressure-reduced chamber 3 occur continuously, it is possible to enhance dehumidification performance such as a dehumidification rate by the continuous dehumidification not accompanied by the regeneration treatment. Therefore, it is possible to provide the practical and efficient dehumidifier 1.

An applicable structure of the dehumidifier 1 of the arrangement is not limited to the structure illustrated in Fig. 7. The dehumidifier 1 of the arrangement can be variously modified. In Fig. 7, the first space S1 is set in the separation chamber 2 of the dehumidifier 1, but the first space S1 is not limited to this. As illustrated in Fig. 8, the first space S1 may be the dehumidification target space Rx itself. That is, the pressure-reduced chamber 3 constituting the second space S2 and the target space Rx constituting the first space S1 may be arranged, with the gas separator 5 therebetween. In this case, as a result of pressure-reducing the pressure-reduced chamber 3, vapor (moisture) is directly removed from the air in the dehumidification target space Rx (first space S1). The setting of the first space S1 and the second space S2 can be variously changed.

A dehumidification rate V is a value measured as follows. First, the space Rx is provided in a thermohygrostat kept at constant humidity and temperature, using a 1 L vessel having a 10 mm diameter hole. In such a structure, the dehumidification is performed by the dehumidifier (gas separating device) illustrated in Fig. 1 while the pressure in the second space relative to that of the first space is set to -80 kPa, and a value calculated from the time taken for the dehumidification from a specific relative humidity to a relative humidity that is 10% lower than the specific relative humidity and the area of the vapor separator (gas separator) is the dehumidification rate V. The measurement is conducted at a 40°C temperature and the effective area of the vapor separator is that calculated from a 10 mm diameter. For example, if the time taken for the relative humidity to decrease from 70% to 60% is one hour, the dehumidification rate V is 10%/h.

EXAMPLES

Next, Examples and their evaluation results will be described.

(Example 1)

First, a disk-shaped honeycomb base made of an alumina sintered compact was prepared. In through holes of the honeycomb base, LTA zeolite particles with a 3 $\mu$m average particle size were filled and compressed under a 1 t/cm$^2$ pressure, whereby a 2 mm thick composite member was fabricated. The zeolite particles form compacts (porous aggregates). Measurement of the pore shape and so on of the compacts of the zeolite particles by a mercury intrusion method showed that an average pore size of the pores was 400 nm and volume porosity was 32%. Air permeability K of the composite member was 3 x 10⁻¹⁴ m². Measurement of a vapor separation ratio α and a vapor permeation rate V when this composite member was used as a gas separator showed that the vapor separation ratio α = 3 and the vapor permeation rate V = 330 g/h/m² under the condition of a 40°C temperature of the air supplied to the dehumidification side and saturated vapor. Further, the inside of a 1 L vessel was dehumidified using a gas separator constituted by the composite member. When the inside of the vessel was pressure-reduced and dehumidified for one hour through the separator, a relative humidity before the dehumidification, which was 70%, was reduced to 60%, and thus a dehumidification rate was 10%/h. When the dehumidification test was further repeated several times, similar results were obtained in all the tests.

(Example 2)

LTA zeolite particles with a 3 μm average particle size and small-diameter particles whose average particle size was adjusted to 300 nm by pulverizing the LTA zeolite particles with a bead mill were prepared. The LTA zeolite particles with the 3 μm average particle size and the LTA zeolite particles with the 300 nm average particle size (small-diameter particles) were mixed at a 100 : 7 volume ratio. This mixed powder was filled in through holes of a disk-shaped honeycomb base made of an aluminum sintered compact and compressed under a 1 t/cm² pressure, whereby a 2 mm thick composite member was fabricated. When air permeability K, a vapor separation ratio α, and a vapor permeation rate V of thus obtained composite member were measured in the same manner as in Example 1, the air permeability K = 7 x 10⁻¹⁴ m², the vapor separation ratio α = 6, and the vapor permeation rate V = 540 g/h/m². When a dehumidification test was conducted as in Example 1 using this composite member as a vapor separator, a dehumidification rate was 12%/h. When the dehumidification test was further repeated several times, similar results were obtained in all the tests.

(Example 3)

LTA zeolite fabricated through hydrothermal crystallization was taken out, and was filled in through holes of a disk-shaped honeycomb base made of an alumina sintered compact to be compacted, and the resultant was subjected to hydrothermal crystallization treatment at 90°C and cleaned. When air permeability K, a vapor separation ratio α, and a vapor permeation rate V of thus obtained composite member were measured in the same manner as in Example 1, the air permeability K = 2 x 10⁻¹⁴ m², the vapor separation ratio α = 10, and the vapor permeation rate V = 300 g/h/m². When a dehumidification test was conducted as in Example 1 using this composite member as a vapor separator, a dehumidification rate was 8%/h. When the dehumidification test was further repeated several times, similar results were obtained in all the tests.

(Example 4)

The composite member fabricated in Example 1 was made to react with vapor in an autoclave device to be made into a gas separator. When air permeability K, a vapor separation ratio α, and a vapor permeation rate V of thus obtained gas separator were measured in the same manner as in Example 1, the air permeability K = 1.5 x 10⁻¹⁴ m², the vapor separation ratio α = 15, and the vapor permeation rate V = 280 g/h/m². When a dehumidification test was conducted as in Example 1 using this vapor separator, a dehumidification rate was 8%/h. When the dehumidification test was further repeated several times, similar results were obtained in all the tests.

(Example 5)

First, a disk-shaped honeycomb base made of polyimide resin was prepared. In through holes of this honeycomb base, LTA zeolite particles with a 3 μm average particle size were filled and compressed under a 1 t/cm² pressure, whereby a 2 mm thick composite member was fabricated. When air permeability K, a vapor separation ratio α, and a vapor permeation rate V of thus obtained composite member were measured in the same manner as in Example 1, the air permeability K = 3 x 10⁻¹⁴ m², the vapor separation ratio α = 3, and the vapor permeation rate V = 300 g/h/m². When a dehumidification test was conducted as in Example 1 using this composite member as a vapor separator, a dehumidification rate was 9%/h. When the dehumidification test was further repeated several times, similar results were obtained in all the tests.

(Example 6)

First, a disk-shaped honeycomb base made of metal aluminum was prepared. In through holes of this honeycomb base, LTA zeolite particles with a 3 μm average particle size were filled and compressed under a 1 t/cm² pressure, whereby a 2 mm thick composite member was fabricated. When air permeability K, a vapor separation ratio α, and a vapor permeation rate V of thus obtained composite member were measured in the same manner as in Example 1, the air permeability K = 3 x 10⁻¹⁴ m², the vapor separation ratio α = 3, and the vapor permeation rate V = 360 g/h/m². When a dehumidification test was conducted as in Example 1 using this composite member as a vapor separator, a dehumidification rate was 1 1%/h. When the dehumidification test was further repeated several times, similar results were obtained in all the tests.

(Example 7)

A composite member was fabricated in the same manner as in Example 6 except that a honeycomb base used was the disk-shaped honeycomb base made of metal aluminum but had a plurality of holes which were formed in its partition walls to connect the adjacent through holes. When properties, a dehumidification rate, and so on of thus obtained composite member were measured, similar results to those of Example 6 were obtained.

(Example 8)

A composite member was fabricated in the same manner as in Example 6 except that a honeycomb base used was the disk-shaped honeycomb base made of metal aluminum but had a plurality of projections and depressions which were formed on its partition walls. When properties, a dehumidification rate, and so on of thus obtained composite member were measured, similar results to those of Example 6 were obtained.

(Example 9)

A composite member was fabricated in the same manner as in Example 6 except that a honeycomb base used was the disk-shaped honeycomb base made of metal aluminum but had a plurality of grooves which were formed in its partition walls to extend in the thickness direction. When properties, a dehumidification rate, and so on of thus obtained composite member were measured, similar results to those of Example 6 were obtained.

(Example 10)

Tests were conducted in which the composite members fabricated in Examples 6 to 9 were dropped from aim height. Breakage was visually confirmed when the composite members of Examples 6 to 9 were dropped two times, four times, three times, and three times respectively.

(Comparative Example 1)

LTA zeolite particles with a 3 $\mu$m average particle size were filled in a mold and compression-molded under a 1 t/cm$^2$ pressure, whereby a 2 mm thick compact was fabricated. When air permeability K, a vapor separation ratio $\alpha$, and a vapor permeation rate V of this compact were measured in the same manner as in Example 1, the air permeability K = 3 x 10$^{-14}$ m$^2$, the vapor separation ratio $\alpha$ = 3, and the vapor permeation rate V = 300 g/h/m$^2$. When a dehumidification test was conducted as in Example 1 using this composite member as a vapor separator, a dehumidification rate was 9%/h. When the dehumidification test was further repeated several times, the compact was broken to be unusable.

(Comparative Example 2)

LTA zeolite particles with a 3 $\mu$m average particle size and small-diameter particles whose average particle size was adjusted to 300 nm by pulverizing the LTA zeolite particles with a bead mill were prepared. The 4A zeolite particles with the 3 $\mu$m average particle size and the 4A zeolite particles with the 300 nm average particle size (small-diameter particles) were mixed at a 100 : 7 volume ratio. This mixed powder was filled in a mold and compression-molded under a 1 t/cm$^2$ pressure, whereby a 2 mm thick compact was fabricated. When air permeability K, a vapor separation ratio $\alpha$, and a vapor permeation rate V of this compact were measured in the same manner as in Example 1, the air permeability K = 5 x 10$^{-14}$ m$^2$, the vapor separation ratio $\alpha$ = 6, and the vapor permeation rate V = 500 g/h/m$^2$. When a dehumidification test was conducted as in Example 1 using this composite member as a vapor separator, a dehumidification rate was 5%/h. When the dehumidification test was further repeated several times, the compact was broken to be unusable.

(Comparative Example 3)

LTA zeolite was rubbed over a surface of an alumina substrate, and the resultant was immersed in a solution (90°C) for hydrothermal crystallization for one hour to be made to react, whereby a 5 $\mu$m thick LTA zeolite membrane was formed on the surface of the alumina substrate. When a vapor separation ratio $\alpha$ and a vapor permeation rate V of the obtained zeolite membrane were measured in the same manner as in Example 1, the vapor separation ratio $\alpha$ > 100 and the vapor permeation rate V = 100 g/h/m$^2$, but during the measurement, the LTA zeolite membrane together with the substrate was broken and it was not possible to separate water for a long time. The air permeability at this time was 1 x 10$^{-15}$ cm$^2$.

(Comparative Example 4)

An acetone solution of polyvinyl butyral (PVB) with a 5% concentration was added to alumina particles whose average particle size was 0.4 $\mu$m to granulate the alumina particles, thereafter the resultant was filled in a mold and shaped under a 1 t/cm$^2$ pressure, and further sintered at 1000°C, whereby a 2 mm thick alumina porous sintered compact was fabricated. When air permeability K, a vapor separation ratio $\alpha$, and a vapor permeation rate V of the porous sintered compact were measured in the same manner as in Example 1, the air permeability K = 1 x 10$^{-12}$ m$^2$, the vapor separation ratio $\alpha$ = 1, and the vapor permeation rate V = 4000 g/h/m$^2$. When a dehumidification test was conducted as in Example 1 using this composite member as a vapor separator, the dehumidification was not possible.

(Comparative Example 5)

Tests were conducted in which the compacts fabricated in Comparative examples 1 and 2 were dropped from aim height. Breakage was visually confirmed when the compacts of Comparative examples 1 and 2 were dropped once and once respectively.

While certain arrangements of the present invention have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

(Numbered Clauses relating to the arrangements)

1. A composite member comprising:

a honeycomb base having a first face, a second face opposite to the first face, and a plurality of through holes juxtaposed and made apart from each other by partition walls extending between the first face and the second face; and
porous aggregates of inorganic material particles, filled in the through holes, each having a third face located on the first face side and a fourth face located on the second face side, wherein the porous aggregates each include pores passing from the third face to the fourth face among the inorganic material particles, and an air permeability of the porous aggregates from the third faces to the fourth faces is not less than $1 \times 10^{-14}$ m$^2$ nor more than $1 \times 10^{-11}$ m$^2$.

2. A gas separator arranged between a first space and a second space, the gas separator comprising:

a honeycomb base having a first face, a second face opposite to the first face, and a plurality of through holes juxtaposed and made apart from each other by partition walls extending between the first face and the second face; and
porous aggregates of inorganic material particles, filled in the through holes, each having a third face located on the first face side and a fourth face located on the second face side, wherein the porous aggregates each include pores passing from the third face to the fourth face among the inorganic material particles, and an air permeability of the porous aggregates from the third faces to the fourth faces is not less than $1 \times 10^{-14}$ m$^2$ nor more than $1 \times 10^{-11}$ m$^2$, and

wherein the gas separator is configured to be permeated separation target gas existing in the first space to the second space by making a partial pressure of the separation target gas in the second space lower than a partial pressure of the separation target gas in the first space.

3. The gas separator according to clause 2, wherein a thickness from the first face to the second face is not less than 0.1 mm nor more than 30 mm.

4. The gas separator according to clause 2 or clause 3, wherein an average pore size of the pores in the porous aggregates is not less than 1 nm nor more than 5 μm.

5. The gas separator according to any one of clauses 2 to 4, wherein a volume porosity of the porous aggregates is not less than 20% nor more than 70%.

6. The gas separator according to any one of clauses 2 to 5, wherein the porous aggregates are unsintered compacts of the inorganic material particles, heat-treated bodies of the unsintered compacts, or sintered compacts of the inorganic material particles.

7. The gas separator according any one of clauses 2 to 6, wherein the porous aggregates each include a liquefied substance of the separation target gas held in the pores.

8. The gas separator according to any one of clauses 2 to 6,
wherein the separation target gas is vapor, and the porous aggregates are aggregates of the inorganic material particles having a hydrophilic property, and wherein the porous aggregates include water held in the pores.

9. The gas separator according to any one of clauses 2 to 8, wherein the inorganic material particles include at least one selected from the group consisting of: an oxide of at least one first element selected from aluminum, silicon, titanium, zirconium, zinc, magnesium, and iron; aluminosilicate of at least one selected from alkali metal and alkaline-earth metal; carbonate of at least one second element selected from magnesium, calcium, and strontium; phosphate of the second element; and titanate of at least one third element selected from magnesium, calcium, strontium, barium, and aluminum.

10. A gas separating device comprising:

a first space;
a second space communicating with the first space;
the gas separator according to any one of clauses 2 to 9 provided so as to separate the first space and the second space, with the first and third faces exposed to the first space and with the second and fourth faces exposed to the second space; and
a gas pressure adjusting unit which adjusts the partial pressure of the separation target gas in the second space so as to make the partial pressure of the separation target gas in the second space lower than the partial pressure of the separation target gas in the first space,
wherein the separation target gas existing in the first space is permeated to the second space through the gas separator.

11. The device according to clause 10, wherein the gas pressure adjusting unit includes a pressure adjusting unit which makes a pressure in the second space lower than a pressure in the first space.

12. The device according to clause 10 or clause 11, wherein the separation target gas is vapor, and the vapor existing in the first space is permeated to the second space through the gas separator.

**Claims**

1. A composite member comprising:

    a honeycomb base having a first face, a second face opposite to the first face, and a plurality of through holes juxtaposed and made apart from each other by partition walls extending between the first face and the second face; and
    porous aggregates of inorganic material particles, filled in the through holes, each having a third face located on the first face side and a fourth face located on the second face side,
    wherein the porous aggregates each include pores passing from the third face to the fourth face among the inorganic material particles, and
    an air permeability of the porous aggregates from the third faces to the fourth faces is not less than $1 \times 10^{-14}$ m$^2$ nor more than $1 \times 10^{-11}$ m$^2$.

2. A gas separator arranged between a first space and a second space, the gas separator comprising:

    a honeycomb base having a first face, a second face opposite to the first face, and a plurality of through holes juxtaposed and made apart from each other by partition walls extending between the first face and the second face; and
    porous aggregates of inorganic material particles, filled in the through holes, each having a third face located on the first face side and a fourth face located on the second face side,
    wherein the porous aggregates each include pores passing from the third face to the fourth face among the inorganic material particles, and
    an air permeability of the porous aggregates from the third faces to the fourth faces is not less than $1 \times 10^{-14}$ m$^2$ nor more than $1 \times 10^{-11}$ m$^2$, and
    wherein the gas separator is configured to be permeated separation target gas existing in the first space to the second space by making a partial pressure of the separation target gas in the second space lower than a partial pressure of the separation target gas in the first space.

3. The gas separator according to claim 2, wherein a thickness from the first face to the second face is not less than 0.1 mm nor more than 30 mm.

4. The gas separator according to claim 2 or claim 3, wherein an average pore size of the pores in the porous aggregates is not less than 1 nm nor more than 5 $\mu$m.

5. The gas separator according to any one of claims 2 to 4, wherein a volume porosity of the porous aggregates is not less than 20% nor more than 70%.

6. The gas separator according to any one of claims 2 to 5, wherein the porous aggregates are unsintered compacts of the inorganic material particles, heat-treated bodies of the unsintered compacts, or sintered compacts of the inorganic material particles.

7. The gas separator according any one of claims 2 to 6, wherein the porous aggregates each include a liquefied substance of the separation target gas held in the pores.

8. The gas separator according to any one of claims 2 to 6,
wherein the separation target gas is vapor, and the porous aggregates are aggregates of the inorganic material particles having a hydrophilic property, and
wherein the porous aggregates include water held in the pores.

9. The gas separator according to any one of claims 2 to 8, wherein the inorganic material particles include at least one selected from the group consisting of: an oxide of at least one first element selected from aluminum, silicon, titanium, zirconium, zinc, magnesium, and iron; aluminosilicate of at least one selected from alkali metal and alkaline-earth metal; carbonate of at least one second element selected from magnesium, calcium, and strontium; phosphate of the second element; and titanate of at least one third element selected from magnesium, calcium, strontium, barium, and aluminum.

10. A gas separating device comprising:

    a first space;
    a second space communicating with the first space;
    the gas separator according to any one of claims 2 to 9 provided so as to separate the first space and the second space, with the first and third faces exposed to the first space and with the second and fourth faces exposed to the second space; and

a gas pressure adjusting unit which adjusts the partial pressure of the separation target gas in the second space so as to make the partial pressure of the separation target gas in the second space lower than the partial pressure of the separation target gas in the first space,

wherein the separation target gas existing in the first space is permeated to the second space through the gas separator.

11. The device according to claim 10, wherein the gas pressure adjusting unit includes a pressure adjusting unit which makes a pressure in the second space lower than a pressure in the first space.

12. The device according to claim 10 or claim 11, wherein the separation target gas is vapor, and the vapor existing in the first space is permeated to the second space through the gas separator.

# FIG. 1

# FIG. 2

# FIG. 3

# FIG. 4

# FIG. 5

# FIG. 6

# FIG. 7

# FIG. 8

Europäisches
Patentamt

European
Patent Office

Office européen
des brevets

# EUROPEAN SEARCH REPORT

Application Number

EP 17 19 2157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/074529 A1 (HARADA KOUICHI [JP] ET AL) 16 March 2017 (2017-03-16)<br>* paragraph [0014] - paragraph [0016]; figures 1,2,4,5 *<br>* paragraph [0018] *<br>----- | 1-12 | INV.<br>B01D53/04<br>B01D53/047<br>B01D53/26<br>B01D53/28<br>F24F3/14 |

TECHNICAL FIELDS
SEARCHED      (IPC)

B01D
F24F

The present search report has been drawn up for all claims

| Place of search | Date of completion of the search | Examiner |
|---|---|---|
| The Hague | 27 April 2018 | Baila, Alexandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 2157

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2018

| Patent document cited in search report | Publication date | Patent family member(s) | Publication date |
|---|---|---|---|
| US 2017074529 A1 | 16-03-2017 | NONE | |

EPO FORM P0459

For more details about this annex : see Official Journal of the European Patent Office, No. 12/82